(19) **Europäisches Patentamt**
**European Patent Office**
**Office européen des brevets**

(11) **EP 1 344 043 B1**

(12) **EUROPEAN PATENT SPECIFICATION**

(45) Date of publication and mention
of the grant of the patent:
**30.07.2008 Bulletin 2008/31**

(51) Int Cl.:
***G01N 15/14*** *(2006.01)*

(21) Application number: **01986914.8**

(86) International application number:
**PCT/EP2001/015108**

(22) Date of filing: **20.12.2001**

(87) International publication number:
**WO 2002/050516 (27.06.2002 Gazette 2002/26)**

(54) **METHOD FOR CHARACTERIZING SAMPLES OF SECONDARY LIGHT EMITTING PARTICLES**

VERFAHREN ZUM CHRAKTERISIEREN VON PROBEN VON SEKUNDÄRLICHT EMITTIERENDEN PARTIKELN

PROCEDE DE CARACTERISATION D'ECHANTILLONS DE PARTICULES LUMINESCENTES SECONDAIRES

(84) Designated Contracting States:
**AT BE CH CY DE DK ES FI FR GB GR IE IT LI LU MC NL PT SE TR**

(30) Priority: **21.12.2000 EP 00128092
21.12.2000 EP 00128142**

(43) Date of publication of application:
**17.09.2003 Bulletin 2003/38**

(73) Proprietors:
• **Evotec AG
22525 Hamburg (DE)**
• **Max-Planck-Gesellschaft zur Förderung der Wissenschaften e.V.
80539 München (DE)**

(72) Inventors:
• **EGGELING, Christian
22761 Hamburg (DE)**
• **KASK, Peet
76902 Harku (EE)**
• **SEIDEL, Claus
37085 Göttingen (DE)**

• **SCHAFFER, Jörg
37083 Göttingen (DE)**

(74) Representative: **Köllner, Malte et al
Köllner & Partner
Patentanwälte
Vogelweidstrasse 8
60596 Frankfurt am Main (DE)**

(56) References cited:
**WO-A-92/07245 WO-A-98/23941
US-A- 4 131 800**

• **KASK P ET AL: "Two-Dimensional Fluorescence Intensity Distribution Analysis: Theory and Applications" BIOPHYSICAL JOURNAL, NEW YORK, US, US, vol. 78, April 2000 (2000-04), pages 1703-1713, XP002168069 ISSN: 0006-3495 cited in the application**
• **KELLER R A ET AL: "SINGLE-MOLECULE FLUORESCENCE ANALYSIS IN SOLUTION" APPLIED SPECTROSCOPY, THE SOCIETY FOR APPLIED SPECTROSCOPY. BALTIMORE, US, vol. 50, no. 7, 1 July 1996 (1996-07-01), pages 12A-32A, XP000642337 ISSN: 0003-7028**

**Description**

The invention relates to a method for characterizing samples of secondary light emitting particles.

More particularly, the invention relates to the field of fluorescence spectroscopy and light scattering, especially to a qualitative and quantitative method for determining properties of secondary light emitting particles present in a sample.

The characterization of such samples plays an important role in chemistry, physics, biology, and medicine. Typical applications are drug screening, high throughput drug screening, or chemical analysis in medicine, forensic science, material science, diagnostics, and biotechnology, furthermore, optimization of properties of molecules, identification of particles, particle sorting, optimization of optical properties of a detection system and / or excitation device, or cell and / or matrix characterization. In life science very often ligand-receptor, substrate-enzyme, protein-protein, protein-DNA or protein-cell-membrane interactions are studied. When imaging cells, the information of emitted secondary light can efficiently be used to produce images with a high contrast ratio and a high content of information. Presently, primarily fluorescence intensity is used in imaging. However, fluorescence intensity as an absolute parameter is ambiguous, since fluorescence quenching and the concentration of the fluorophores influence the signal. Thus, relative fluorescence parameters like fluorescence lifetime, anisotropy or intensity ratios are much more suited.

In the rapidly evolving field of nanobiotechnology manipulation of particles and objects are important issues. Tools for manipulation are atomic force microscope, magnetic tweezers, photonic force microscope (optical tweezers), micro needles, electric fields and field cages and levitated liquid droplets. To control these manipulation tools, secondary light emitted by the particle can be used as an efficient and specific feedback signal.

Emitted secondary light as a readout-parameter is a sensitive tool for the characterization of particles down to the single particle level. To be detected by emitted secondary light, the particle either has to have the ability to emit light by itself or has to be labeled by a secondary light emitting tag, e. g. a fluorescent dye, a luminescent nanoparticle (e. g. a semiconductor quantum dot), or a metal chelate.

The scattering or emission of secondary light after excitation by primary light can be an elastic process, like Rayleigh-, Mie-, and Raman-scattering, or an inelastic process, e. g. luminescence such as phosphorescence or fluorescence.

These processes are typically induced by directing electromagnetic radiation (e. g. appropriate laser light) as primary light onto the sample.

Whereas elastic emission is a temporally prompt process, inelastic emission is generally delayed with respect to the excitation time. In case of luminescence, the probability of electronic deactivation and hence the inelastic emission of light is temporally exponentially distributed. The lifetime of the electronically excited state is defined as the time where the probability to be in the excited state has dropped to 1/e.

Many spectroscopic techniques have been developed, some of which are able to detect single molecules. The most advanced of these single-molecule techniques in terms of the collection of data is the so-called BIFL technique (WO 98/23941), i.e. Burst-Integrated-Fluorescence-Lifetime. This technique is derived from TCSPC (time correlated single photon counting). TCSPC directly records the relative time delay between an excitation pulse and the time of detection of a single photon. Besides this time delay, BIFL can detect the absolute time of detection of a photon relative to an arbitrary clock characterizing the actual time axis of a measurement. This is achieved by measuring the time interval between two successively detected photons. BIFL is, thus, able to collect the maximum amount of temporal information for every single photon emitted by every single particle. BIFL, however, does not create a multidimensional histogram as a function of at least two stochastic variables, derived from detected photons emitted by the sample.Employing BIFL on a confocal fluorescence microscope, conformational dynamics of dye labeled DNA double strands could be followed and their kinetics and molecular states characterized by monitoring jumps in the fluorescence lifetime as well as intensity and performing correlation analysis on these jumps selectively from the signal of single molecules [Eggeling,C.; Fries, J.R.; Brand,L.; Günther,R.; Seidel,C.A.M.: Monitoring conformational dynamics of a single molecule by selective fluorescence spectroscopy; PNAS 1998, 95, 1556-1561]. Furthermore, this technique was used to qualitatively and quantitatively identify different single molecules in a dye mixture by their different fluorescence properties: fluorescence lifetime [Zander,C.; Sauer,M.; Drexhage,K.H.; Ko,D.S.; Schulz,A.; Wolfrum,J.; Brand,L.; Eggeling,C.; Seidel,C.A.M.: Detection and characterization of single molecules in aqueous solution; Appl.Phys.B 1996, 63 (5), 517 - 523], fluorescence lifetime and fluorescence intensity [Fries,J.R.; Brand,L.; Eggeling,C.; Köllner,M.; Seidel,C.A.M.: Quantitative identification of different single-molecules by selective time-resolved confocal fluorescence spectroscopy; J.Phys.Chem.A 1998, 102, 6601-6613], and fluorescence anisotropy (Schaffer,J.; Volkmer,A.; Eggeling,C.; Subramaniam,V.; Striker,G.; Seidel, C.A.M.: Identification of single molecules in aqueous solution by time-resolved fluorescence anisotropy; J.Phys.Chem.A 1999, 103 (3), 331-336].

Other powerful spectroscopic techniques on the single-molecule level are signal fluctuation methods. Since its early invention fluorescence correlation spectroscopy (FCS) has developed to a frequently used method in life science to characterize samples via their translational diffusion properties or time constants of kinetics, in particular photophysical kinetics. FCS extracts the information by correlating changes in the raw photon count signal originating from number fluctuations of secondary light emitting particles in the detection volume.

A very recently developed fluctuation method is fluorescence intensity distribution analysis (FIDA) [Kask,P.; Palo,K.; Ullman,D.; Gall,K.: Fluorescence-intensity distribution analysis and its application in biomolecular detection technology; PNAS 1999, 96 (24), 13756-13761], [Chen, Y.; Müller, J.D.; So, P.T.C.; Gratton, E.: The Photon Counting Histogram in Fluorescence Fluctuation Spectroscopy; Biophys.J. 1999, 77, 553-567.], [Fries,J.R.; Brand,L.; Eggeling, C.; Köllner,M.; Seidel,C.A.M.: Quantitative identification of different single-molecules by selective time-resolved confocal fluorescence spectroscopy; J.Phys.Chem.A 1998, 102, 6601-6613]. FIDA builds up a frequency histogram over the photon counts detected within fixed time intervals of the raw data stream. Applying a theoretical description of this histogram, FIDA is able to distinguish molecular components within a particle mixture via their different signal brightness properties and to yield their absolute concentrations.

Further recently developed theories in the field of molecular brightness analysis are:

(1) Two-dimensional FIDA (2D-FIDA) which collects the two-dimensional joint photon count number distribution within fixed time intervals of two detectors monitoring different wavelength ranges or different polarization directions of the emitted secondary light [Kask, P.; Palo, K.; Fay, N.; Brand, L.; Mets, Ü.; Ullman, D.; Jungmann, J.; Pschorr, J.; Gall, K.: Two-Dimensional Fluorescence Intensity Distribution Analysis: Theory and Applications; Biophys. J. 2000, 78, 1703-1713]. 2D-FIDA yields absolute molecular concentrations of a sample mixture comprising particles which exhibit different polarization, brightness, or spectral properties of the emitted secondary light. 2D-FIDA, however, does not further analyze species of particles from a sample detected with the help of a multi-dimensional histogram. (2) Fluorescence intensity multiple distribution analysis (FIMDA) builds up several signal intensity distributions of different fixed time intervals to characterize molecular components of a particle mixture via their different translational diffusion and brightness properties [Palo, K.; Mets, Ü.; Jäger, S.; Kask, P.; Gall, K.: Fluorescence Intensity Multiple Distribution Analysis: Concurrent Determination of Diffusion Times and Molecular Brightness; Biophys.J. 2000, 79 (6)].

Due to their high statistical accuracy the FIDA(-based) methods are increasingly applied in high-throughput-screening [Schaertl, S.; Meyer-Almes, F.J.; Lopez-Calle, E.; Siemers, A.; Kramer, J.: A novel and robust homogeneous fluorescence-based assay using nanoparticles for pharmaceutical screening and diagnostics; J..Biomolecular Screening 2000, 5 (4), 227-237], [Ullman, D.; Busch, M.; Mander, T.: Fluorescence correlation spectroscopy-based screening technology; Inn. Pharm. Tech. 1999, 30-40].

Up to date, the potential of these powerful techniques has not yet fully been exploited.

The object of the invention is to improve known spectroscopic techniques.

This object is solved by the invention according to the independent claim. Advantageous embodiments of the invention are characterized in the dependent claims.

According to the invention, emitted secondary radiation is induced for particles in a measurement volume. Excitation of the particles can e. g. take place as single-photon excitation, two-photon excitation or multi-photon excitation or by chemical reactions. The mechanism of secondary radiation emission can e. g. be Rayleigh scattering, Racrian- or Mie-scattering, Surface-Enhanced-Raman-Scattering (SERS), Surface-Enhanced-Resonance-Raman-Scattering (SERRS) or luminescence such as fluorescence or phosphorescence or chemi-luminescence. In the following, the word "light" will sometimes be used instead of "radiation". The word "light" is used as abbreviation for electromagnetic radiation, visible or invisible.

The light used for inducing the secondary light emission may be continuous or sinusoidally modulated, e. g. for phase modulation measurements, or it may be a series of light pulses.

The emitted secondary light, e. g. the intensity of Raman-scattering or of fluorescence light emitted from said particles, is monitored by detecting a sequence or sequences of photon counts emitted by said particles. This can be done with the help of one or more than one photon detector which monitor different polarization components and / or wavelengths of the emitted secondary light. By using different detectors and / or different polarization filters in front of the detectors, one can observe the whole range of orientation, polarization and rotational diffusion of the secondary light emitting particles.

Fluorescence is generally but not exclusively characterized by four variables: (1) spectral properties characterized by the excitation and emission wavelengths of radiation; (2) fluorescence quantum yield resulting in a certain fluorescence brightness at a given excitation intensity and wavelength; (3) polarization of the fluorescence with respect to the polarization of the excitation light; and (4) fluorescence lifetime characterizing the mentioned electronic deactivation.

In this invention, the sequence or sequences of detected photon counts are divided into counting intervals. From the detected photons in every counting interval at least two stochastic variables are derived. In general, these variables can be of those mentioned above.

One of the stochastic variables can be the number of photons counted by one of the detectors or a function of the numbers of photons counted by different detectors within each counting interval. The term function generally includes the identical function or identity, i.e. a function whose result is identical to the variable it takes as argument.

In an advantageous embodiment of the invention, at least two detectors observe different polarizations of the emitted light and one of the stochastic variables is the anisotropy of the emitted secondary light. The anisotropy r of scattered light is generally defined as

$$r = (F_p - F_s) / (F_p + 2 F_s) \qquad (1)$$

where $F_p$ and $F_s$ are the temporally integrated values of the detected intensities with parallel ($F_p$) and perpendicular ($F_s$) polarization relative to the polarization of the exciting light. In the case of counting intervals, r can be determined from $F_p$ and $F_s$, which then represent the number of photons detected with parallel and perpendicular polarization within each counting interval.

Equally well, one of the stochastic variables can be the detection delay times of the detected photons or photon counts relative to a reference time within the period of the modulated light, e. g. relative to the corresponding excitation pulse. This can be done using techniques well known from TCSPC. In general, one will also measure the absolute time of detection of a photon relative to some clock, as it is common for BIFL. The stochastic variables can also be a function of the detection delay times, e. g. the mean delay time observed for each counting interval, which, for fluorescence, is generally close to the fluorescence lifetime. For promptly scattered light, the delay time will be close to zero. The function can also be the sum of the detection delay times within each counting interval or a resulting parameter of a fit to the histogram of detection delay times within each counting interval.

The detection delay times allow the determination of the signal decay time. In general, the signal decay time reflects the characteristic time delay between the excitation of a particle and its secondary photon emission. The signal decay time is a specific property of the secondary light emitting particle and differs for the various secondary light emission processes. In the case of fluorescence it can be the fluorescence lifetime.

One can also use the rotational correlation time of the emitted secondary light as one stochastic variable. The rotational correlation time p is the time in which an orientation of the secondary light emitting particle relaxes to 1/e of its initial value. It can be determined either by analyzing the histograms of the delay times from one or all detectors or from the fluorescence lifetime $\tau$ and the anisotropy r using the Perrin-equation, $r = r_0 (1 + \tau/\rho)$. $r_0$ is a particle specific constant.

Orientation (or anisotropy) and deexcitation (or fluorescence lifetime) can be correlated, indicating binding and local neighborhood of the scattering particle.

When using two detectors monitoring the emitted secondary light in different wavelength ranges, one has the possibility to observe e. g. the intensity in the different wavelength ranges and, thus, fluorescence resonance energy transfer (FRET) from one particle to some other particle. This allows the determination of the FRET-efficiency and of distances between particles, and, furthermore, the observation of conformational changes, binding equilibria, and spatially resolved reactions.

Also, the stochastic variables can be two signal decay times or at least one signal decay time and an efficiency of energy transfer from one scattering particle to some other scattering particle. The embodiment allows e. g. the observation and correlation of signals in different wavelength ranges and their respective decay constants. It also allows the characterization of biexponential signal decays. One can determine whether both decay constants occur at the same time (correlated) or whether they are uncorrelated, because they are e. g. caused by different binding sites or different molecular states.

Besides the already mentioned variables, further examples of variables are: intersystem crossing rate, transport properties characterized by the translational and rotational diffusion coefficient, absorption cross-section, etc.

When choosing the number of photon counts within the counting intervals or the time duration of the counting intervals as one stochastic variable, one can measure the brightness of the secondary light emitting particles, e. g. the brightness of a fluorescence signal. The brightness is defined as the efficiency of turning excitation light into detected light. It mainly is a product of the scattering or absorption cross-section, the emission or fluorescence quantum yield and the detection efficiency. The determination of the brightness can e. g. be performed via FIDA and allows e. g. the determination of concentrations, stoichiometry, and multimerization instead of just dimerization, i.e. the absolute number of scattering particles can be observed [see e. g. Peet Kask, Kaupo Palo, Dirk Ullmann, and Karsten Gall: "Fluorescence-intensity distribution analysis and its application in biomolecular detection technology"; PNAS 1999, vol. 96, 13756-13761.].

The time duration of counting intervals by itself can be used as one stochastic variable, providing e. g. a measure of the intensity of the radiation detected in the counting interval. Furthermore, in order to use the intensity of the counting interval as a direct stochastic variable, one can directly calculate it e. g. by dividing the number of photon counts within the counting interval by its time duration. In case one observes the secondary light emission from single particles, the intensity equals the above mentioned brightness of the single secondary light emitting particle.

When choosing a function of the temporal interval between the detection times of successively detected photons (interphoton times) of one detector or a group of different detectors within the same counting interval as one stochastic variable, as it is common in BIFL experiments, one can e. g. calculate the absolute arrival time of every photon. This is a way of determining the absolute time axis and intensity of the detected signal, which allows auto- or cross-correlation analysis like in FCS or intensity distribution analysis like in FIDA. As one example of application, one can determine triplet state properties within a counting interval from this analysis , e. g. by comparing the triplet decay time or triplet population of a counting interval as determined from FCS with the signal decay time. Kinetic constants, transport properties like translational diffusion constants, and brightness values can also be deduced from interphoton times.

Arbitrary combinations of two or more of the above mentioned stochastic variables are possible to determine correlations between these parameters. In particular, any one or more of the above mentioned stochastic variables can be combined or correlated with the signal decay time or the signal decay times observed by different detectors.

To determine correlations of the stochastic variables a multidimensional distribution function is deduced from the data, in particular a histogram. In the following, the word "histogram" will sometimes be used instead of "distribution function".

The multidimensional histogram is constructed as a function of at least two stochastic variables, whereby the histogram is built up using values of the variables determined for each counting interval; e. g. the frequency of a pair of values of two variables jointly determined from each counting interval is obtained for a whole measurement. Similar histograms are known from [Herten, D.P.; Tinnefeld, P.; Sauer, M.: Identification of single fluorescently labeled mononucleotide molecules in solution by spectrally resolved time-correlated single-photon counting; Appl.Phys.B 2000, 71, 765-771] or from [Kask, P.; Palo, K.; Fay, N.; Brand, L.; Mets, Ü.; Ullman, D.; Jungmann, J.; Pschorr, J.; Gall, K.: Two-Dimensional Fluorescence Intensity Distribution Analysis: Theory and Applications; Biophys. J. 2000, 78, 1703-1713].

The construction of a multidimensional histogram in general allows the rendering of correlations between the variables. If for example the examined sample comprises two separate molecular components, these may be identified by two well-separated distributions within the histogram, since in general the components give rise to different sets of stochastic variables. It also helps to reduce the calculation effort needed to analyze the data by reducing the number of data from hundreds of thousands of photon counts with their temporal information to merely one histogram. The generated multidimensional histograms can also be used to recognize or classify certain parameter patterns, which can easily be analyzed by pattern recognition or image analysis algorithms like smoothing, contrast enhancement, filtering, statistical analyses like maximum likelihood analysis, parameter fitting, clustering with a fuzzy covariance matrix, Bayesian analysis, K-means clustering, application of the Fuzzy Kohonen Clustering Network, etc. [D. Driankov, D.;Hellendoorn, H.; Reinfrank, M.: An Introduction to Fuzzy Control; Springer-Verlag, 1993], [Roeder, K.; Wasserman, L.: Practical Bayesian density estimation using mixtures of normals; Journal of the American Statistical Association, 1997, 92, 894-902], [Anderberg, M. R.: Cluster analysis for applications; Academic Press, New York, 1973, xiii + 35p. Nauck, D.; Klawonn, F.; Kruse, R.: 'Neuronale Netze und Fuzzy-Systeme'; Vieweg, 1994]. In this way, also dynamic sequences of e. g. two-dimensional histograms can be viewed like a film or analyzed with pattern recognition algorithms.

Thus, the histogram is analyzed to determine combinations of the at least two stochastic variables belonging selectively to at least one species of light emitting particles. These species can e. g. simply be bound or unbound states of a given molecule or they can be chemically different molecules.

According to the invention, at least one species of light emitting particles is selected from the multidimensional histogram for further analysis. This can be achieved by further processing only those counting intervals having a combination of the at least two stochastic variables which belong to the at least one selected species of light emitting particles. As mentioned before, a single species can generally be recognized by a well-separated distribution within the histogram.

The detected photons from the selected counting intervals are further analyzed by spectroscopic analysis techniques to characterize the secondary light emitting particles of the selected species. Any spectroscopic analysis techniques can be utilized for further analysis. Further analysis can e. g. result in more detailed values of the above mentioned stochastic variables. Often, correlation analysis (e. g. FCS), FIDA or lifetime analyses will be used. Resulting from this further analysis different particles of a sample can be further characterized, which e. g. reveals details of heterogeneities within the different particles.

Thus, a very powerful tool for selecting parts of the data for further analysis can be derived from the multidimensional histogram.

Most of the stochastic variables listed above are very sensitive to the local environment of the secondary light emitting particle and can be measured e. g. via fluorescence detection. Thus, in the case of changes in the local environment of the secondary light emitting particle, e. g. during an aggregation, changes of the variables are generally induced. Therefore, the information about a reaction between two particles can be detected by relating the change of one of the variables to the reaction.

A polarization measurement allows e. g. the selective determination of rotational diffusion constants, i.e. mobilities of particles, for states with e. g. different signal decay times or signal brightness, like particles in different binding states or binding sites.

The described method is generally well suited for single molecule spectroscopy. The observation of single molecule events is especially well suited for observing the correlation of stochastic variables, since the correlation between these variables can be observed for a single particle at a time and is not blurred by a statistical average over several particle signals.

For example, the invention allows observing binding reactions that are of uttermost importance for high throughput screening in pharmacology. The binding reactions can be studied using the invention in great detail. In general, one can observe the dynamics of a reaction, the conformation of complexed molecules, conformational changes, distances between molecules, e. g. with the help of FRET (fluorescence resonance energy transfer). Also, one can observe the orientation of particles or their local mobility using polarization measurements.

In an advantageous embodiment of the invention, the sequence of photon counts is divided into counting intervals by defining the end of a counting interval when a predefined number of photons has been counted either by a given single detector or jointly by a given set of detectors, wherein said predefined number of photons is greater than one. The counting intervals can be chosen more or less arbitrarily, e. g. based on the average intensity value of a certain number of photons or based on the time delay between successively detected photons averaged over a certain number of photons, etc. These intervals can be overlapping, they can be immediate neighbors, or they may be well spaced from one another. The latter will be the case if single molecules are observed and the counting intervals roughly correspond to the fluorescence bursts caused by a single molecule traversing the measurement volume. The number of photons can be on the order of e.g. 100 - 200. The definition of counting intervals with a predetermined number of detected photons leads to well-defined statistical properties of the detected signal. Thus, by choosing a certain number, N, of photons for the counting interval, the accuracy of the measured parameters can directly be chosen. This is due to the dependence of the standard deviations, $\sigma_\tau$, $\sigma_r$, and $\sigma_E$, of the parameters fluorescence lifetime, $\tau$, anisotropy, r, and efficiency of fluorescence resonance energy transfer (FRET), E, on the number, N, of photon counts used for parameter determination. The formulas are:

(a) fluorescence lifetime, $\tau$:

$$\sigma_\tau(\tau, N) = \frac{k}{T/\tau}(1 - e^{-T/\tau})\left(\frac{e^{T/(\tau k)}(1 - e^{-T/\tau})}{(e^{T/(\tau k)} - 1)^2} - \frac{k^2}{(e^{-T/\tau} - 1)}\right)^{-\frac{1}{2}} * \frac{\tau}{\sqrt{N}} \quad (2)$$

(T: time window of TCSPC used for lifetime determination, k: number of channels within this time window) [Hall, P.; Selinger, B.: Better Estimates of Exponential Decay Parameters; 1981, 85, 2941-2946], [Zander, C.; Sauer, M.; Drexhage, K.H.; Ko, D.S.; Schulz, A.; Wolfrum, J.; Brand, L.; Eggeling, C.; Seidel, C.A.M.: Detection and characterization of single molecules in aqueous solution; Appl.Phys.B 1996, 63 (5), 517 - 523]

(b) anisotropy, r:

$$\sigma_r = \frac{1}{3}\frac{(2 + r)\sqrt{(1 - r)(1 + 2r)}}{\sqrt{N}} \quad (3)$$

(This equation is derived from error propagation assuming Poissonian noise of the detected signal.)

(c) efficiency of FRET, E:

$$\sigma_E = \frac{1}{\sqrt{N}}E*[E*(1 - X) + X]*\sqrt{\frac{1 - E}{E}} \quad (4)$$

(X = ($\Psi_D/\Psi_A$) * ($\Phi_D/\Phi_A$), $\Psi_{D/A}$: detection efficiency of the signal emitted by the donor/acceptor molecule of the FRET-pair, $\Phi_{D/A}$: fluorescence quantum yield of the do-nor/acceptor molecule of the FRET-pair alone. This equation is derived from error propagation assuming Poissonian noise of the detected signal.)

When comparing the width of the separated distributions to the theoretical prediction of the according parameters or stochastic variable (e. g., eqs. (2) to (4)), heterogeneities of the different particles can be discovered. An important feature of this approach is the possibility to vary the size of the photon window in order to vary statistical accuracy to a desired level. This allows one to answer the above question in a most efficient manner. In this way, it is also possible to plot the photon number vs. the parameter to directly resolve heterogeneities.

The described method goes beyond known spectroscopic techniques in particular in the following aspects:

(1) The signal of photon counts can be detected in distinct intervals of a fixed photon count number as well as in a fixed time interval.

(2) In the case, a fixed photon count number is chosen for the counting intervals, this determination of the counting intervals leads to well-defined statistical properties of the stochastic variables. Therefore, the width of the whole or of parts of the multidimensional histogram directly reveals heterogeneities of the sample or of molecular components of the sample. Also a plot of the photon number within a photon window against theoretical and observed standard deviations can reveal heterogeneities.

(3) The signal properties of the photon counts are used to determine stochastic variables within each counting interval to build up a multi-dimensional joint histogram of these variables or properties. In contrast, 2D-FIDA directly plots the two-dimensional joint photon count number distribution.

(4) The most important new feature of this invention is that it enables to select only those photon counts from counting time intervals assigned to at least one species and to further analyze these selected photons. This species-selective analysis enables new possibilities like revealing heterogeneities within a single species.

Other objects, advantages and novel features of the invention will become apparent from the following detailed description of the invention when taken in conjunction with the accompanying drawings.

Fig. 1     is a schematic diagram of the optical setup;
Fig. 2     is a graph showing time-gated signal traces;
Fig. 3     is a multidimensional histogram; and
Fig. 4     is a graph showing a selective fluorescence intensity distribution analysis for data selected from Fig. 3.

In the presently preferred embodiment, silver particles were investigated. These were nearly spherical, essentially mono-disperse particles (Ag54) with $54 \pm 6$ nm diameter at a concentration of app. $10^{13}$ particles/liter and a characteristic diffusion time $\tau_D$ = 20 ms across the measurement volume. The silver hydrosols were activated by $Cl^-$-ions at a concentration of 2 mM and incubated with a dilute solution of Rhodamine 6G at a concentration of app. $10^{-12}$ M. This procedure led to less than one dye molecule per silver particle.

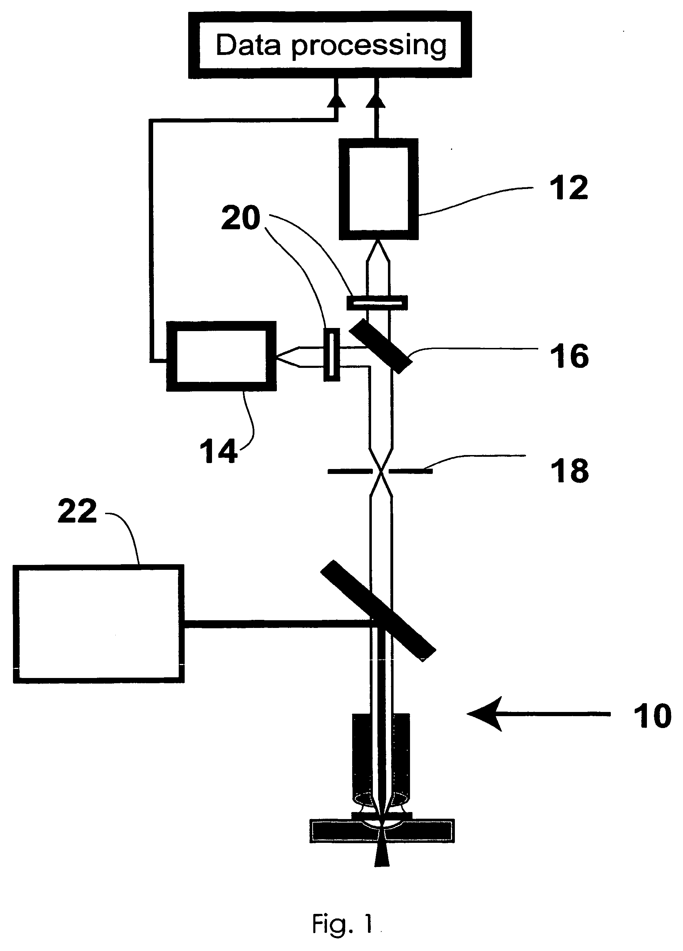

Fig. 1 shows a schematic diagram of the optical setup. Single-molecule SERRS was performed with a confocal epi-illuminated microscope 10 with two detectors 12, 14 for separate detection of parallel or perpendicular polarized signal components, separated by a polarization beam splitter cube 16. The confocal microscope has a pinhole 18 with a diameter of 100 $\mu$m. Additionally, spectral band-pass filters 20 for the relative wavenumbers of 550-2300 $cm^{-1}$ were used in front of each detector. The size of the measurement volume was app. 3 fl, resulting in a characteristic diffusion time for Rhodamine 6G molecules in water of $\tau_D$ = 0.3 ms. A linearly polarized, mode-locked argon ion laser 22 was applied for pulsed excitation at 496 nm. The repetition rate of the laser was 73 MHz, the pulse width 190 ps, and the focal excitation irradiance 190 kW $cm^{-2}$. The scattered photons were detected with the help of avalanche photodiodes as detectors 12, 14. The detected photon counts were registered by a PC-BIFL-card (SPC 432, Becker&Hickl GmbH, Berlin, Germany). The stored data were subjected to selective analysis as described below.

Using pulsed laser excitation and a highly diluted aqueous solution of silver colloids Ag54 (app. $10^{13}$ particles/ liter) with less than one Rhodamine 6G molecule per particle, signal bursts with count rates higher than 100 kHz indicate transits of individual particles or molecules, respectively.

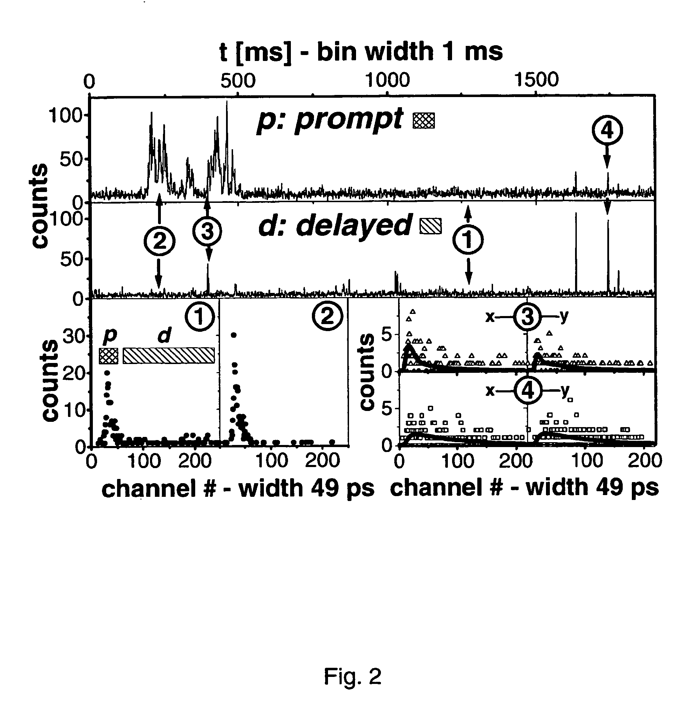

Fig. 2 shows time-gated signal traces (see below for more details) that allow distinguishing between temporally prompt, p, Raman scattering signal (upper trace) and delayed, d, fluorescence signal (lower trace).

Using excitation by a pulsed, linearly polarized laser and a confocal microscope with two detectors, one can calculate three spectroscopic parameters from the raw data:

- intensity, $I_s$, measured by the interphoton times, $\Delta t$, between successively,detected photons with a time resolution of 50 ns;
- signal decay properties characterized by the 1/e-decay time, $\tau_s$, which is obtained from detection delay times measured by time-correlated single-photon counting (TCSPC); and
- time-integrated anisotropy, $r$.

An important step in analyzing a single molecule experiment is to distinguish between signal and background.

Burst selection can nicely be realized using the time-information obtained by the interphoton time, $\Delta t$. A signal is classified as signal burst, if $\Delta t$ for 150 consecutive photons is below the threshold value of 0.049 ms after Lee filtering [Enderlein, J.; Robbins, D.L.; Ambrose, W.P.; Goodwin, P.M.; Keller, R.A.: "The statistics of single molecule detection: an overview"; Bioimaging 1997, 5, 88-98]. Thus, data analysis is restricted to only those registered events which are within the signal burst of a single molecule / particle transit selected from the signal trace.

TCSPC allows to construct histograms of photon arrival times relative to the incident laser pulse for each selected region in the signal trace (see histograms ①, ②, ③, and ④ in the lower part of Fig. 2). Due to the pronounced difference in the decay times of Raman and fluorescence signals, time-gating is an efficient criterion to distinguish between prompt Raman (p: channels 20-50) and delayed fluorescence signal (d: channels 60-250) in computed multi-channel scaler traces (upper/ lower trace in Fig. 2). Shaded bars p, d in signal arrival time histogram ① indicate the time gating intervals.

Four typical situations ①, ②, ③, and ④ are marked in the signal traces and the corresponding arrival time histograms ①, ②, ③, and ④ illustrate different signal decay properties:

① background signal due to the Raman signal of water and dark counts of the detector (count rate: 12 kHz, 65 % of the total signal appear in the $p$-channel);
② SERRS bursts with count rates of more than 100 kHz (87% of the signal in the p-channels);
③ fluorescence signal within a SERRS-burst for the two polarization components x and y;
④ fluorescence burst of a freely diffusing Rhodamine 6G for the two polarization components x and y.

An established maximum-likelihood estimator [Hall, P.; Selinger, B.: "Better Estimates of Exponential Decay Parameters"; J.Phys.Chem. 1981, 85, 2941-2946] was applied to calculate the 1/e-signal-decay time, $\tau_s$, for a total number of channels, m = 200, starting from the maximum (Channel: 30) to 230, whereby the channel width T is equal to 49 ps. $\tau_s$ is determined by the weighted sum of the events, $N_i$, registered in channel i, divided by the total number of number of events $N$. Following this estimator, $\tau_s$ is the solution of equation (5):

$$1 + \left( Exp\left( -T/\tau_s \right) - 1 \right)^{-1} - m\left( Exp\left( -mT/\tau_s \right) - 1 \right)^{-1} = N^{-1} \sum_{i=1}^{m} iN_i \qquad (5)$$

The statistical relevance of single-molecule observations is judged by analysis of 300 bursts. Within each burst, the signal is binned into sub-histograms with a constant number of 150 counts. Sliding this event-window or counting interval stepwise along the registered counts, sliding signal-parameter analysis can be performed to generate parameter-time trajectories [Eggeling, C.; Fries, J.R.; Brand, L.; Günther, R.; Seidel, C.A.M.: Monitoring conformational dynamics of a single molecule by selective fluorescence spectroscopy; PNAS 1998, 95, 1556-1561] .

Three parameter-traces for signal intensity, $I_s$, 1/e signal decay time, $\tau_s$, and anisotropy, $r$, are calculated. The macroscopic time information of these signal parameter traces is obtained by the mean of the interphoton times, $\Delta t$, for every counting interval. In this way, the time evolution of characteristic parameters of a single molecule / particle can be monitored simultaneously in real time.

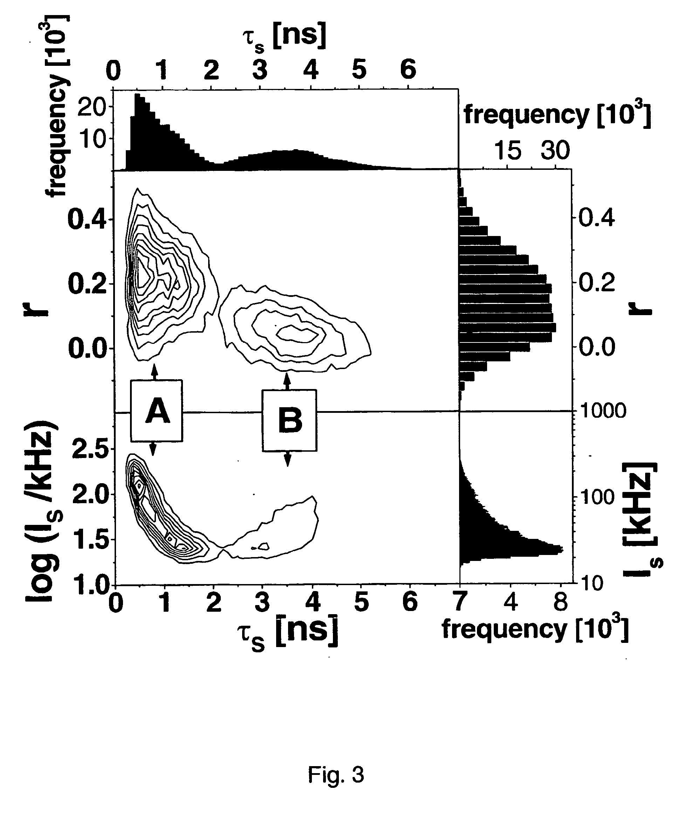

For each counting interval or point of time, respectively, the values of the pairs ($r$, $\tau_s$) and ($I_s$, $\tau_s$) are counted to generate a two-dimensional normalized frequency histogram as shown in Fig. 3 for the Ag54 sample.

Two different species, adsorbed and free dye, marked as regions A and B, respectively, are clearly evident in the normalized histogram of $r$ vs. $\tau_s$ and $I_s$ vs. $\tau_s$ (Fig. 3) . Within the error limits of $\pm 17$ % determined for the sliding analysis window of 150 events, the adsorbed dye (A) is characterized by a prompt, strongly polarized Raman signal. The decay time $\tau_s$ is small and equal to the instrument response function with background events included. The average anisotropy $r_{av}$ is 0.24. The free dye (B) is characterized by a well-known, unquenched, mainly depolarized fluorescence ($\tau_s$ = 3.8 ns, $r_{av}$ = 0.02).

This clear identification of the two different species would have posed difficulties without the two-dimensional histogram representation. The one-dimensional projections of the data of Fig. 3 onto the r-axis or $I_s$-axis, respectively, do not allow a distinction between the two different species. They only show one broad distribution.

The lower plot of $I_s$ vs. $\tau_s$ (Fig. 3) shows that under the conditions described, where the selected spectral range favors SERRS detection, the Raman scattering signal is higher than the fluorescence signal. If, however, the set-up is optimized for the detection of Rhodamine 6G fluorescence, $I_s$ values > 300 kHz (data not shown) can be obtained; i.e. SERRS and fluorescence can approximately achieve the same signal strengths.

The clear identification of the two different species (A: bound to silver particle, B: free dye) allows a selection of the data from one of the species for selective further analysis, e. g. to answer the question how many Rhodamine 6G molecules are bound to the silver particles.

Such quantitative questions can be answered by fluorescence-intensity distribution analysis (FIDA). FIDA has been developed for confocal microscopy studies in which the fluorescence intensity has a spatially heterogeneous brightness profile.

FIDA allows determining specific brightness values, $C_0$, in a heterogeneous sample. Besides experimental parameters (laser intensity, $I(r)$, $r$ now denoting a spatial coordinate, or detection efficiency, $g$) the brightness $C_0 = g\,I(r)\,t$ depends on the fluorescence quantum yield, dark state properties, and on the number of bound fluorophores on a single nanoparticle. The specific brightness $C_0$ corresponds to the number of counts in a time interval, t, where the molecule is in the center of the detection volume element, i.e. $I(r=0)$.

For the selective FIDA-analysis, the intensity data only of region A in Fig. 3 are converted into a probability density, $P_1(C_t, t)$, of fluorescence count rates, $C_t$, in a certain time interval t (here t = 100 $\mu$s) to obtain information on the brightness, $C_0(X)$, of each contributing species X.

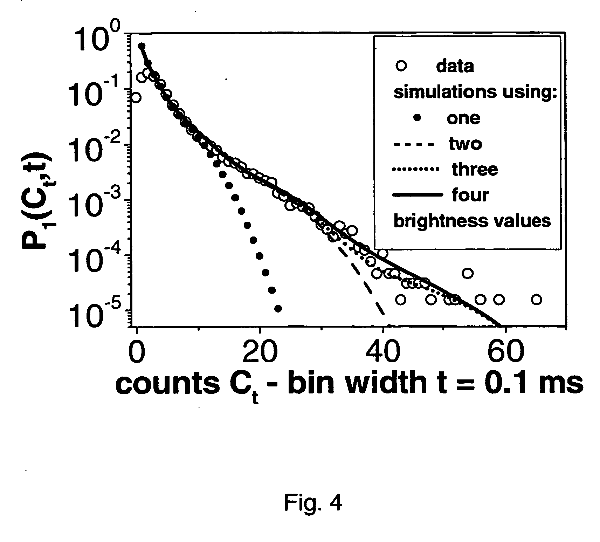

The results are shown in Fig. 4, showing the distribution of the fluorescence count rate $C_t$. The decrease of the observed relative frequencies (open circles) in the first three channels is due to the selection of signal bursts of particles passing through the measurement volume. These bursts have a certain minimum intensity and thus a certain minimum count rate. This decrease is neglected in the simulation.

The signal intensity distribution of the bursts in region A of Fig. 3 is compared with four simulations assuming different numbers of species with fixed brightness values. Thereby $P_1(C_t, t)$ is computed as a normalized sum of a background signal with a Poissonian distributed and a fluorescence signal with species-specific brightnesses, $C_0(X)$ (Eq. 9 of [Fries, J.R.; Brand, L.; Eggeling, C.; Köllner, M.; Seidel, C.A.M.: Quantitative identification of different single-molecules by selective time-resolved confocal fluorescence spectroscopy; J.Phys.Chem.A 1998, 102, 6601-6613]). The four simulations for the photon count density, $P_1(C_t, t = 100\ \mu s)$, are based on models with a background signal of 12 kHz (14 %) and a varying number of fixed brightnesses: one brightness (black dots), $C_0 = 12$ (86 %); two brightnesses (dashed line), $C_0(1) = 12$ (56 %) and $C_0(2) = 28$ (30 %) ; three brightnesses (dotted line), $C_0(1) = 12$ (56 %), $C_0(2) = 28$ (28 %), and $C_0(3) = 56$ (2 %) and four brightnesses (solid line), $C_0(1) = 12$ (56 %), $C_0(2) = 28$ (26 %), $C_0(3) = 40$ (3 %) and $C_0(4) = 56$ (1 %).

The comparison shows that at least three (small dotted line) or four brightnesses (solid line), $C_0(1) = 12$ (56 %), $C_0(2) = 28$ (26 %), $C_0(3) = 40$ (3 %) and $C_0(4) = 56$ (1 %), and a background of 12 kHz (14%) are necessary to achieve a satisfactory agreement between theory and experiment. In principle, this heterogeneity of the signal can have several reasons such as particle aggregation, more than one SERRS-active molecule adsorbed on the nanoparticle and different binding sites with specific SERRS enhancement factors. Due to the rotational and translational diffusion characteristics resulting from photon correlation experiments (data not shown) and due to the spectral properties of the colloid (data not shown), particle aggregation as the main reason for the heterogeneity can be excluded. In view of the applied stoichiometry, binding of multiple dyes on the nanoparticles is not very likely. Accordingly, the low fraction of the large brightnesses, $C_0(3) = 40$ (3 %) and $C_0(4) = 56$ (1 %), might be attributed to binding of multiple dyes on the nanoparticles. Therefore, it can be deduced from Fig. 4 that the main fraction of signal, characterized by the two brightnesses $C_0(1) = 12$ (56 %) and $C_0(2) = 28$ (26 %), is predominantly generated by single SERRS active dye molecules in heterogeneous binding sites of the nanoparticles.

These results cannot be achieved by simple FIDA analysis without preselection in a multidimensional histogram since for FIDA the freely diffusing particles would blur the signal. Only the preselection with the help of the multidimensional histogram leads to the correct results.

Many other methods for further data analysis can equally be applied, e. g. fluorescence correlation spectroscopy.

Many modifications and variations of the present invention are possible without departing from the scope of the invention.

For example, the excitation can be accomplished by more than one light source. Besides the epi-illuminated microscope, many other optical arrangements are suitable for the excitation, including evanescent excitation, Raman microscopes, confocal laser scanning microscopes and scanning near-field microscopes.

Also the detector does not necessarily have to be an avalanche photodiode. Any sensitive detector will do, like photomultipliers or CCD cameras. The latter have the additional advantage to allow the simultaneous observation of many samples, e. g. in a microtiter plate.

In case some of the properties of the particles are known, it is possible to perform more complex analyses to generate histograms. In a heterogeneous sample, e. g., fluorescence decay histograms can be analyzed with more than one exponential for the lifetime and/or rotational correlation time. Usually some parameters, e. g. the lifetimes, are known from previous experiments and can be used as constants in a fit. Thus, e. g. the amplitudes of the individual lifetime components remain to be determined by the fit, which improves the accuracy substantially. The obtained amplitudes can be used as stochastic variables for a multidimensional histogram. This is also well suited for the analysis of samples of higher concentrations than used for single molecule detection.

Finally, further analysis after preselection in a multidimensional histogram does not necessarily have to rely on counting interval with a predefined number of photons. The counting intervals can be defined by any manner, e. g.

by a fix temporal interval, as it is usually the case.

It is, therefore, to be understood that within the scope of the appended claims the invention may be practiced otherwise than as specifically described.

List of reference numerals

| | |
|---|---|
| 10 | confocal epi-illuminated microscope |
| 12 | detector |
| 14 | detector |
| 16 | polarization beam splitter |
| 18 | pinhole |
| 20 | spectral band-pass filter |
| 22 | laser |

**Claims**

1. A method for characterizing samples of secondary radiation emitting particles, said method comprising the steps of:

   (a) inducing secondary radiation emission by the particles in a measurement volume,
   (b) detecting sequences of photons emitted by said particles,
   (c) dividing said detected sequences of photons into counting intervals,
   (d) deriving from the detected photons in every counting interval at least two stochastic variables ($\tau$, I, r),
   (e) determining a multidimensional histogram as a function of the at least two stochastic variables ($\tau$, I, r), whereby the histogram is built up using values of the variables determined for each counting interval,
   (f) analyzing the histogram to determine combinations of the at least two stochastic variables ($\tau$, I, r) belonging selectively to at least one species (A, B) of radiation emitting particles,
   (g) selecting at least one species (A, B) of radiation emitting particles,
   (h) selecting the counting intervals having a combination of the at least two stochastic variables ($\tau$, I, r) belonging to the at least one selected species (A, B) of radiation emitting particles,
   (i) further analyzing the detected photons from the selected counting intervals by spectroscopic analysis techniques to characterize the secondary radiation emitting particles of the selected species (A, B).

2. The method according to the preceding claim wherein the detected sequences of photons are divided into counting intervals by defining the end of a counting interval when a predefined number of photons has been counted either by a given single detector or jointly by a given set of detectors, wherein said predefined number of photons is greater than one.

3. The method according to one of the preceding claims wherein the said sequences of photon counts are monitored by using at least one detector (12, 14) or at least two detectors (12, 14) which monitor different polarization components and / or wavelengths of the emitted secondary radiation.

4. The method according to one of the preceding claims wherein the emission of secondary radiation is induced by modulated radiation of a given period; detection delay times of the photon counts relative to a reference time within the period of the modulated radiation are determined for each detector, and wherein one of the said stochastic variables ($\tau$, I, r) is a function of said delay times from photon counts of one detector or a group of different detectors.

5. The method according to the preceding claim wherein said stochastic variable which is a function of said detection delay times from photon counts of one detector or a group of detectors is selected from the group consisting of a mean of detection delay times, a sum of detection delay times, and a resulting parameter of a fit to the distribution function, in particular a histogram of detection delay times, which can be e. g. signal decay time or rotational correlation time.

**6.** The method according to one of the preceding claims
wherein one stochastic variable is selected from the group consisting of

the number of photons counted within said counting interval by one of the detectors (12,14) or a group of different detectors, or a function of the numbers of photons counted within said counting interval by one or by different detectors, the intensity of the emitted radiation within said counting interval observed by one of the detectors or a group of different detectors, or a function of the intensity of the emitted radiation within said counting interval observed by one or by different detectors,

the time duration of the said counting intervals or a function of the time duration of the said counting intervals, the brightness (I) of the emitted radiation as determined from one detector or a group of different detectors, the anisotropy (r) of the emitted radiation as determined from a group of different detectors or from all detectors, and the efficiency of fluorescence resonance energy transfer between different particles.

**7.** The method according to one of the preceding claims
wherein one stochastic variable is selected from the group consisting of
a function of the temporal interval between the detection times of successively detected photons (interphoton times) of one detector or a group of different detectors,
a function of the decay or amplitude of a correlation function of the said function of the interphoton times, and
a function of the decay or amplitude of the intensity distribution of the said function of the interphoton times.

**8.** The method according to one of the preceding claims
wherein the secondary emitted radiation is induced by excitation radiation like single-photon excitation, two-photon excitation or multi-photon excitation or by chemical reactions.

**9.** The method according to one of the preceding claims
wherein the mechanism of secondary radiation emission is Rayleigh scattering, Raman- or Mie-scattering, Surface-Enhanced-Raman-Scattering (SERS), Surface-Enhanced-Resonance-Raman-Scattering (SERRS) or luminescence such as fluorescence or phosphorescence or chemi-luminescence.

**10.** The method according to one of the preceding claims
wherein the secondary emitted radiation is observed solely from single particles and the said sequences of photon counts comprises either the signal from the whole or only from parts of the measurement.

**11.** The method according to one of the preceding claims
wherein a method of image analysis is applied to said distribution function.

**12.** The method according to one of the preceding claims for use in diagnostics, high throughput drug screening, optimization of properties of molecules, identification of particles, particle sorting, or optimization of optical properties of the detection and / or excitation devices, or cell and / or matrix characterization.

**Patentansprüche**

**1.** Verfahren zur Charakterisierung von Proben von Sekundärstrahlung emittierender Partikel, folgende Schritte enthaltend:

(a) Induzierung einer Emission von Sekundärstrahlung durch die Partikel in einem Messvolumen;
(b) Detektion von Photonenfolgen, die von diesen Partikeln emittiert werden;
(c) Unterteilung der detektierten Photonenfolgen in Zählintervalle;
(d) Ableitung von mindestens zwei stochastischen Variablen (τ, I, r) aus den detektierten Photonen innerhalb jedes Zählintervalls;
(e) Bestimmung eines multidimensionalen Histogramms als eine Funktion von den mindestens zwei stochastischen Variablen (τ, I, r), wobei das Histogramm unter Verwendung der Werte der Variablen aufgebaut wird, die für jedes Zählintervall bestimmt wurden;
(f) Analyse des Histogramms, um Kombinationen der mindestens zwei stochastischen Variablen (τ, I, r) zu bestimmen, die selektiv zu mindestens einer Spezies (A, B) der Strahlung emittierenden Partikel gehören;
(g) Auswahl von mindestens einer Spezies (A, B) der Strahlung emittierenden Partikel;

(h) Auswahl der Zählintervalle, die eine Kombination der mindestens zwei stochastischen Variablen ($\tau$, I, r) besitzen, die zu der mindestens einer Spezies (A, B) der Strahlung emittierenden Partikel gehört;

(i) Weitere Analyse der detektierten Photonen der ausgewählten Zählintervalle mit spektroskopischen Analysemethoden, um die Sekundärstrahlung emittierenden Partikel der ausgewählten Spezies (A, B) zu charakterisieren.

2. Verfahren nach dem vorhergehenden Anspruch, wobei die detektierten Photonenfolgen dadurch in Zählintervalle unterteilt werden, dass das Ende eines Zählintervalls definiert wird, wenn eine vordefinierte Anzahl von Photonen entweder durch einen bestimmten einzelnen Detektor oder zusammenwirkend durch eine definierte Gruppe von Detektoren gezählt worden ist, wobei die vordefinierte Anzahl von Photonen größer als eins ist.

3. Verfahren nach einem der vorhergehenden Ansprüche, wobei die Zählungen der Photonenfolgen mit mindestens einem Detektor (12, 14) oder mindestens zwei Detektoren (12, 14), die verschiedene Polarisationsanteile und / oder Wellenlängen der emittierten Sekundärstrahlung beobachten, beobachtet wird.

4. Verfahren nach einem der vorhergehenden Ansprüche, wobei die Emission der Sekundärstrahlung durch eine modulierte Strahlung von einer bestimmten Dauer induziert wird;
Detektionsverzögerungszeiten der Photonenzählungen relativ zu einer Referenzzeit innerhalb der bestimmten Dauer der modulierten Strahlung für jeden Detektor bestimmt wird, und wobei
eine der stochastischen Variablen ($\tau$ I, r) eine Funktion der Verzögerungszeiten der Photonenzählungen durch einen Detektor oder einer Gruppe von verschiedenen Detektoren ist.

5. Verfahren nach dem vorhergehenden Anspruch, wobei die stochastische Variable, die eine Funktion der Detektionsverzögerungszeiten der Photonenzählung durch einen Detektor oder einer Gruppe von Detektoren ist, ausgewählt wird aus der Gruppe bestehend aus
einem Mittel von Detektionsverzögerungszeiten,
einer Summe von Detektionsverzögerungszeiten, und
einem Parameter, resultierend aus einem Fit gegen die Verteilungsfunktion, insbesondere einem Histogramm von Detektionsverzögerungszeiten, welche beispielsweise Abklingzeit des Signals oder Rotationskorrelationszeit sein kann.

6. Verfahren nach einem der vorhergehenden Ansprüche, wobei eine stochastische Variable ausgewählt wird aus der Gruppe bestehend aus
der Anzahl von Photonen, die innerhalb des Zählintervalls durch einen der Detektoren (12, 14) oder einer Gruppe von verschiedenen Detektoren gezählt werden, oder eine Funktion der Anzahl von Photonen, die innerhalb des Zählintervalls durch einen oder durch verschiedene Detektoren gezählt werden,
der Intensität der emittierten Strahlung innerhalb des Zählintervalls, die durch einen der Detektoren oder einer Gruppe von verschiedenen Detektoren beobachtet wird, oder eine Funktion der Intensität der emittierten Strahlung innerhalb des Zählintervalls, die von einem oder verschiedenen Detektoren beobachtet wird,
der Dauer der Zählintervalle oder einer Funktion der Dauer der Zählintervalle,
der Helligkeit (I) der emittierten Strahlung bestimmt durch einen Detektor oder einer Gruppe von verschiedenen Detektoren,
der Anisotropie (r) der emittierten Strahlung bestimmt durch einen Detektor oder einer Gruppe von verschiedenen Detektoren, und
der Effizienz des Fluoreszenzresonanzenergietransfers zwischen verschiedenen Partikeln.

7. Verfahren nach einem der vorhergehenden Ansprüche, wobei eine stochastische Variable ausgewählt wird aus der Gruppe bestsehend aus,
einer Funktion des zeitlichen Intervalls zwischen den Detektionszeitpunkten der sukzessiv detektierten Photonen (Interphotonenzeit) durch einen Detektor oder einer Gruppe von verschiedenen Detektoren,
einer Funktion des Abklingens oder der Amplitude einer Korrelationsfunktion der Funktion der Interphotonenzeiten, und
einer Funktion des Abklingens oder Amplitude der Intensitätsverteilung der Funktion der Interphotonenzeiten.

8. Verfahren nach einem der vorhergehenden Ansprüche, wobei die emittierte Sekundärstrahlung durch Anregung mit Strahlung, wie Einphotonenanregung, Zweiphotonenanregung oder Multiphotonanregung oder durch chemische Reaktionen induziert wird.

**EP 1 344 043 B1**

9. Verfahren nach einem der vorhergehenden Ansprüche, wobei der Mechanismus der Emission der Sekundärstrahlung Rayleigh-Streuung, Raman- oder Mie-Streuung, Oberflächenverstärkte Raman-Streuung (SERS), Oberflächenverstärkte Resonanzramanstreuung (SERRS) oder Lumineszenz, wie Fluoreszenz oder Phosphoreszenz oder Chemilumineszenz ist.

10. Verfahren nach einem der vorhergehenden Ansprüche, wobei die emittierte Sekundärstrahlung ausschließlich von einzelnen Partikeln beobachtet wird und die Folgen von Photonenzählungen entweder das Signal der gesamten oder nur von Teilen der Messung enthalten.

11. Verfahren nach einem der vorhergehenden Ansprüche, wobei ein Verfahren zur Bildanalyse auf die Verteilungsfunktion angewendet wird.

12. Verfahren nach einem der vorhergehenden Ansprüche zur Verwendung zur Diagnose, High-throughput-screening von Arzneimitteln, Optimierung von Eigenschaften von Molekülen, Identifikation von Partikeln, Sortierung von Partikeln oder Optimierung von optischen Eigenschaften der Detektions- und / oder Anregungsgeräte oder Zellen und / oder Matrixcharakterisierung.

**Revendications**

1. Procédé de caractérisation d'échantillons de particules émettrices de rayonnement secondaire, ledit procédé comportant les étapes consistant à:

   (a) induire une émission de rayonnement secondaire par les particules situées dans un volume de mesure,
   (b) détecter des séquences de photons émies par lesdites particules,
   (c) diviser lesdites séquences de photons détectées en intervalles de comptage,
   (d) tirer des photons détectés dans chaque intervalle de comptage au moins deux variables stochastiques ($\tau$, I, r),
   (e) déterminer un histogramme multidimensionnel en fonction desdites au moins deux variables stochastiques ($\tau$, I, r), l'histogramme étant construit à l'aide de valeurs des variables déterminées pour chaque intervalle de comptage,
   (f) analyser l'histogramme pour déterminer des combinaisons desdites au moins deux variables stochastiques ($\tau$, I, r) appartenant sélectivement à au moins une espèce (A, B) de particules émettrices de rayonnement,
   (g) sélectionner au moins une espèce (A, B) de particules émettrices de rayonnement,
   (h) sélectionner les intervalles de comptage présentant une combinaison desdites au moins deux variables stochastiques ($\tau$, I, r) appartenant à la ou aux espèces (A, B) sélectionnées de particules émettrices de rayonnement,
   (i) analyser en outre les photons détectés issus des intervalles de comptage sélectionnés par des techniques d'analyse spectroscopiques afin de caractériser les particules émettrices de rayonnement secondaire de la ou des espèces (A, B) sélectionnées.

2. Procédé selon la revendication précédente, les séquences de photons détectées étant divisées en intervalles de comptage en définissant la fin d'un intervalle de comptage lorsqu'un nombre prédéterminé de photons a été compté, soit par un détecteur unique donné, soit par un ensemble donné de détecteurs, ledit nombre prédéterminé de photons étant supérieur à un.

3. Procédé selon l'une des revendications précédentes, lesdites séquences de décomptes de photons étant surveillées à l'aide d'au moins un détecteur (12, 14) ou d'au moins deux détecteurs (12, 14) surveillant des composantes de polarisations et / ou de longueurs d'ondes différentes du rayonnement secondaire émis.

4. Procédé selon l'une des revendications précédentes,
   l'émission de rayonnement secondaire étant induite par un rayonnement modulé de période donnée;
   des temps de retard de détection des décomptes de photons par rapport à un instant de référence au cours de la période du rayonnement modulé étant déterminés pour chaque détecteur, et
   l'une desdites variables stochastiques ($\tau$, I, r) étant fonction desdits temps de retard issus des décomptes de photons d'un détecteur ou d'un groupe de détecteurs différents.

5. Procédé selon la revendication précédente, ladite variable stochastique qui est fonction desdits temps de retard de détection issus des décomptes de photons d'un détecteur ou d'un groupe de détecteurs étant choisie dans le groupe formé:

    d'une moyenne des temps de retard de détection,

    d'une somme des temps de retard de détection et

    d'un paramètre résultant d'un ajustement à la fonction de répartition, en particulier un histogramme des temps de retard de détection, qui peut être par exemple un temps de décroissance du signal ou un temps de corrélation rotationnel.

6. Procédé selon l'une des revendications précédentes, une des variables stochastiques étant choisie dans le groupe formé:

    du nombre de photons comptés au cours dudit intervalle de comptage par un des détecteurs (12, 14) ou par un groupe de détecteurs différents, ou d'une fonction du nombre de photons comptés au cours dudit intervalle de comptage par un détecteur ou par différents détecteurs,

    de l'intensité du rayonnement émis au cours dudit intervalle de comptage observée par un des détecteurs ou par un groupe de détecteurs différents, ou d'une fonction de l'intensité du rayonnement émis au cours dudit intervalle de comptage observée par un détecteur ou par différents détecteurs,

    de la durée desdits intervalles de comptage ou d'une fonction de la durée desdits intervalles de comptage,

    de la luminosité (I) du rayonnement émis telle que déterminée à partir d'un détecteur ou à partir d'un groupe de détecteurs différents,

    de l'anisotropie du rayonnement émis telle que déterminée à partir d'un groupe de détecteurs différents ou à partir de tous les détecteurs, et

    du rendement du transfert d'énergie par résonance fluorescente entre différentes particules.

7. Procédé selon l'une des revendications précédentes, une des variables stochastiques étant choisie dans le groupe formé:

    d'une fonction de l'intervalle temporel entre les temps de détection de photons détectés successivement (temps interphotons) d'un détecteur ou d'un groupe de détecteurs différents,

    d'une fonction de la décroissance ou de l'amplitude d'une fonction de corrélation de ladite fonction des temps inter-photons, et

    d'une fonction de la décroissance ou de l'amplitude de la répartition d'intensité de ladite fonction des temps inter-photons.

8. Procédé selon l'une des revendications précédentes, le rayonnement secondaire émis étant induit par un rayonnement d'excitation tel qu'une excitation à un seul photon, une excitation à deux photons ou une excitation multi-photons, ou par des réactions chimiques.

9. Procédé selon l'une des revendications précédentes, le mécanisme d'émission du rayonnement secondaire étant une diffusion de Rayleigh, une diffusion Raman ou Mie, une diffusion Raman renforcée par effet de surface (SERS), une diffusion Raman résonante renforcée par effet de surface (SERRS) ou une luminescence telle qu'une fluorescence, une phosphorescence ou une chimioluminescence.

10. Procédé selon l'une des revendications précédentes, le rayonnement secondaire émis étant observé uniquement à partir de particules isolées et lesdites séquences de décomptes de photons comportant le signal issu soit de la totalité, soit seulement de parties de la mesure.

11. Procédé selon l'une des revendications précédentes, un procédé d'analyse d'image étant appliqué à ladite fonction de répartition.

12. Procédé selon l'une des revendications précédentes, destiné à être utilisé dans les diagnostics, le criblage à haut rendement de médicaments, l'optimisation des propriétés de molécules, l'identification de particules, le tri de particules, l'optimisation des propriétés optiques des dispositifs de détection et / ou d'excitation, ou la caractérisation de cellules et / ou de matrices.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9823941 A

### Non-patent literature cited in the description

- **EGGELING,C. ; FRIES,J.R. ; BRAND,L. ; GÜNTHER,R. ; SEIDEL,C.A.M.** Monitoring conformational dynamics of a single molecule by selective fluorescence spectroscopy. *PNAS,* 1998, vol. 95, 1556-1561
- **ZANDER,C. ; SAUER,M. ; DREXHAGE,K.H. ; KO,D.S. ; SCHULZ,A. ; WOLFRUM,J. ; BRAND,L. ; EGGELING,C. ; SEIDEL,C.A.M.** Detection and characterization of single molecules in aqueous solution. *Appl.Phys.B,* 1996, vol. 63 (5), 517-523
- **FRIES,J.R. ; BRAND,L. ; EGGELING,C. ; KÖLLNER,M. ; SEIDEL,C.A.M.** Quantitative identification of different single-molecules by selective time-resolved confocal fluorescence spectroscopy. *J.Phys.Chem.A,* 1998, vol. 102, 6601-6613
- **SCHAFFER,J. ; VOLKMER,A. ; EGGELING,C. ; SUBRAMANIAM,V. ; STRIKER,G. ; SEIDEL,C.A.M.** Identification of single molecules in aqueous solution by time-resolved fluorescence anisotropy. *J.Phys.Chem.A,* 1999, vol. 103 (3), 331-336
- **KASK,P. ; PALO,K. ; ULLMAN,D. ; GALL,K.** Fluorescence-intensity distribution analysis and its application in biomolecular detection technology. *PNAS,* 1999, vol. 96 (24), 13756-13761
- **CHEN, Y. ; MÜLLER, J.D. ; SO, P.T.C. ; GRATTON, E.** The Photon Counting Histogram in Fluorescence Fluctuation Spectroscopy. *Biophys.J.,* 1999, vol. 77, 553-567
- **KASK, P. ; PALO, K. ; FAY, N. ; BRAND, L. ; METS, Ü. ; ULLMAN, D. ; JUNGMANN, J. ; PSCHORR, J. ; GALL, K.** Two-Dimensional Fluorescence Intensity Distribution Analysis: Theory and Applications. *Biophys. J.,* 2000, vol. 78, 1703-1713
- **PALO, K. ; METS, Ü. ; JÄGER, S. ; KASK, P. ; GALL, K.** Fluorescence Intensity Multiple Distribution Analysis: Concurrent Determination of Diffusion Times and Molecular Brightness. *Biophys.J.,* 2000, vol. 79 (6
- **SCHAERTL, S. ; MEYER-ALMES, F.J. ; LOPEZ-CALLE, E. ; SIEMERS, A. ; KRAMER, J.** A novel and robust homogeneous fluorescence-based assay using nanoparticles for pharmaceutical screening and diagnostics. *J..Biomolecular Screening,* 2000, vol. 5 (4), 227-237
- **ULLMAN, D. ; BUSCH, M. ; MANDER, T.** Fluorescence correlation spectroscopy-based screening technology. *Inn. Pharm. Tech.,* 1999, 30-40
- **PEET KASK ; KAUPO PALO ; DIRK ULLMANN ; KARSTEN GALL.** Fluorescence-intensity distribution analysis and its application in biomolecular detection technology. *PNAS,* 1999, vol. 96, 13756-13761
- **HERTEN, D.P. ; TINNEFELD, P. ; SAUER, M.** Identification of single fluorescently labeled mononucleotide molecules in solution by spectrally resolved time-correlated single-photon counting. *Appl.Phys.B,* 2000, vol. 71, 765-771
- **D. DRIANKOV, D. ; HELLENDOORN, H. ; REINFRANK, M.** An Introduction to Fuzzy Control. Springer-Verlag, 1993
- **ROEDER, K. ; WASSERMAN, L.** Practical Bayesian density estimation using mixtures of normals. *Journal of the American Statistical Association,* 1997, vol. 92, 894-902
- **ANDERBERG, M. R.** Cluster analysis for applications. Academic Press, 1973
- **NAUCK, D. ; KLAWONN, F. ; KRUSE, R.** Neuronale Netze und Fuzzy-Systeme. *Vieweg,* 1994
- **HALL, P. ; SELINGER, B.** *Better Estimates of Exponential Decay Parameters,* 1981, vol. 85, 2941-2946
- **ZANDER, C. ; SAUER, M. ; DREXHAGE, K.H. ; KO, D.S. ; SCHULZ, A. ; WOLFRUM, J. ; BRAND, L. ; EGGELING, C. ; SEIDEL, C.A.M.** Detection and characterization of single molecules in aqueous solution. *Appl.Phys.B,* 1996, vol. 63 (5), 517-523
- **ENDERLEIN, J. ; ROBBINS, D.L. ; AMBROSE, W.P. ; GOODWIN, P.M. ; KELLER, R.A.** The statistics of single molecule detection: an overview. *Bioimaging,* 1997, vol. 5, 88-98

- **HALL, P. ; SELINGER, B.** Better Estimates of Exponential Decay Parameters. *J.Phys.Chem.,* 1981, vol. 85, 2941-2946
- **EGGELING, C. ; FRIES, J.R. ; BRAND, L. ; GÜNTHER, R. ; SEIDEL, C.A.M.** Monitoring conformational dynamics of a single molecule by selective fluorescence spectroscopy. *PNAS,* 1998, vol. 95, 1556-1561
- **FRIES, J.R. ; BRAND, L. ; EGGELING, C. ; KÖLLNER, M. ; SEIDEL, C.A.M.** Quantitative identification of different single-molecules by selective time-resolved confocal fluorescence spectroscopy. *J.Phys.Chem.A,* 1998, vol. 102, 6601-6613